# EUROPEAN PATENT SPECIFICATION

(11) **EP 0 535 871 B1**
(45) Date of publication and mention of the grant of the patent: **13.12.1995**
(21) Application number: 92308748.0
(22) Date of filing: 25.09.1992
(51) Int. Cl.: C04B 35/64, F27D 5/00

(54) **A process for producing ceramic honeycomb structural bodies**
Verfahren zur Herstellung von Keramikkörpern mit Honigwabenstruktur
Procédé de fabrication d'éléments en céramique à structure en nid d'abeilles

(30) Priority: 30.09.1991 JP 251658/91
(43) Date of publication of application: 07.04.1993
(73) Proprietor: NGK INSULATORS, LTD., Nagoya City Aichi Pref. (JP)
(72) Inventor: Tasaki, Yuji, Nagoya City, Aichi pref. (JP); Wada, Yukihasa, Aichi-Gun, Aichi Pref. (JP)
(74) Representative: Stoner, Gerard Patrick

(56) References cited:
- EP-A- 0 200 984
- EP-A- 0 232 621
- EP-A- 0 234 887
- DATABASE WPIL Week 8652, Derwent Publications Ltd., London, GB; AN 86-342508 & JP-A-61 256 183

## Description

The present invention relates to a process for producing ceramic honeycomb-structure bodies. More particularly, the invention relates to a firing step of the process.

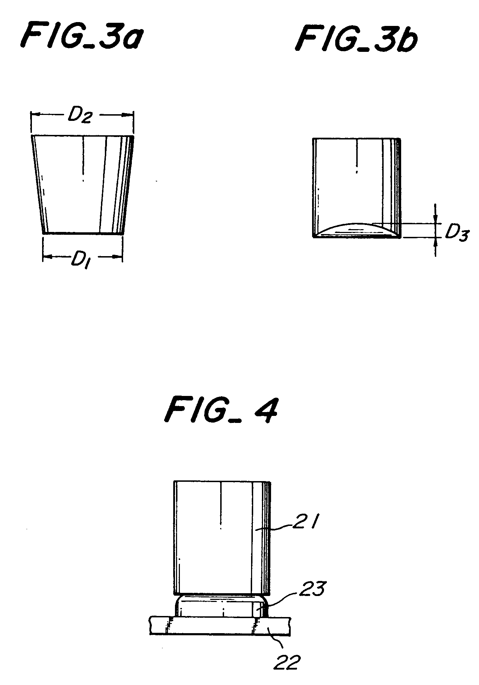

Heretofore, it is a common practice to fire extruded green ceramic honeycomb-structure bodies by passing the honeycomb-structure bodies through a tunnel kiln, the honeycomb bodies being placed on a shelf plate of a truck with their open-cell end surfaces contacting the shelf plate. In order to improve this firing process, EP-A-234 887 (equivalent to JP-B-1/54 636) discloses a process for firing green ceramic honeycomb-structure bodies 21 with a setter 23 placed between the body 21 and a shelf plate 22 as shown in Fig. 4. This setter is a ceramic plate having a honeycomb structure with an upper edge being chamfered.

JP-A-2/199 067 discloses a process for firing green ceramic honeycomb-structure bodies with an alumina base solid plate placed between the body and the shelf plate.

However, the process using the setters as disclosed in EP-A-234 887 has the following problems:
(i) With increase in the number of times of passing the setter through the tunnel kiln, the setter is largely deformed (warped) with heat, or the surface of the setter becomes coarse due to fusing-out of the silica contained in the setter. As a result, the lower end face of the honeycomb-structure body is deformed, or ribs are deformed or cracked.
(ii) The service life of the setter is low, i.e., the number of times of passing the setter through the tunnel kiln is as small as 35 to 40, owing to the above problems.
(iii) Difference in dimension between upper and lower portions of the product is great due to difference in temperature between them.

On the other hand, the process using an alumina base plate as disclosed in JP-A-2/199 067 has the following problems:
(i) With increase in the number of times of passing the alumina base plate through the tunnel kiln, the base plate is warped or deformed owing to the thermal deformation of the shelf plate, when the alumina base plate is thin . As a result, the lower end face of the honeycomb-structure body is deformed or cracked.
(ii) When the alumina base plate is thick, the weight per unit area becomes greater to increase heat capacity.
(iii) The lower end face of the honeycomb-structure body changes color through reaction between the alumina base plate and the lower end face of the honeycomb body. The reason why the lower end face changes color is thought to be that the composition of cordierite constituting the honeycomb body changes slightly at the lower end face due to the reaction between the alumina base plate and the cordierite during firing.

JP-A-61/256183 discloses shelf plates for firing tea cups, tiles, dishes and the like. The shelf plates are made from heat-resistant inorganic fibres and inorganic binders. They have a bulk density of 0.2 to 0.5g/cm³, and a grooved top surface coated with an inorganic coating agent selected from alumina, silica, alumina-silica and zirconia.

We aim to provide a new process which can contribute to one or more of the following:
to reduce twisting of ribs, deformation of an end face and incidental cracking of the end face in a honeycomb-structure body owing to thermal deformation of a firing table; to prolong the service life of the firing table; to reduce difference in dimension between upper and lower portions of the honeycomb-structure body; to prevent color change of the lower end face of the body due to reaction between the firing table and the lower end face of the body.

Broadly, the process of the present invention comprises firing a green ceramic honeycomb-structure body on a ceramic plate composed mainly of heat-resistive inorganic fibers and having a bulk density of not less than 1.00 g/cm³.

It is preferable to fire the body with it placed on a ceramic plate having a coating layer formed on a surface of the ceramic plate, the coating layer being made of either one of mullite and cordierite. In addition, it is preferable that the bulk density of the ceramic plate be not less than 1.00 g/cm³ but not more than 2.5 g/cm³. If the bulk density is more than 2.5 g/cm³, the ceramic plate is too heavy to easily handle. However, the upper limit of the bulk density of 2.5 g/cm³ is not necessarily restrictive in the present invention. Further, it is preferable that the heat-resistive inorganic fibers are made of 55 to 95 wt% of Al₂O₃ and 5 to 45 wt% of SiO₂.

In the above construction, the green ceramic honeycomb-structure body is fired with the ceramic plate, composed mainly of the heat-resistive inorganic fibers and having the bulk density of not less than 1.00 g/cm³, placed between the green ceramic body and the shelf plate. Therefore, as is clear from examples mentioned later, twisting of the ribs, the deformation of the end face and the incidental cracking of the end face in the honeycomb structural body may be reduced. The reason why the bulk density is not less than 1.00 g/cm³ is that, as is seen from the examples mentioned later, if the bulk density is less than 1.00 g/cm³, the honeycomb-structure body is clogged. Further, it was discovered that when the green ceramic honeycomb body is fired on a ceramic plate having the coating layer made of either one of mullite and cordierite formed on the surface thereof, the color change of the lower end face of the honeycomb structural body through the reaction between the ceramic plate and the ceramic honeycomb structural body is prevented. The heat-resistive inorganic fibers are preferably made of 55-95 wt % of Al₂O₃ and 5-45 wt% of SiO₂ from the standpoint of resistance to heat. Alumina and silica may exist in the form of mullite depending on their composition. In addition, ordinary additives such as inorganic filler and binder may be incorporated into the ceramic plate.

The producing process according to the present invention is substantially the same as those in the conventional processes except for the firing step.

For a better understanding of the invention, reference is made to the attached drawings, wherein:
Fig. 1 is a view illustrating an example of the process for producing a ceramic honeycomb-structure body;
Fig. 2 is a view schematically illustrating the state in which the bodies are actually fired in a tunnel kiln;
Fig. 3(a) is a view schematically illustrating differences in dimensions between upper and lower portions of a honeycomb-structure body in Experiments;
Fig. 3(b) is a view schematically showing a degree of depression in a central portion of the honeycomb-structure body in Experiments; and
Fig. 4 is a view schematically illustrating an example of a conventional process for producing a ceramic honeycomb-structure body.

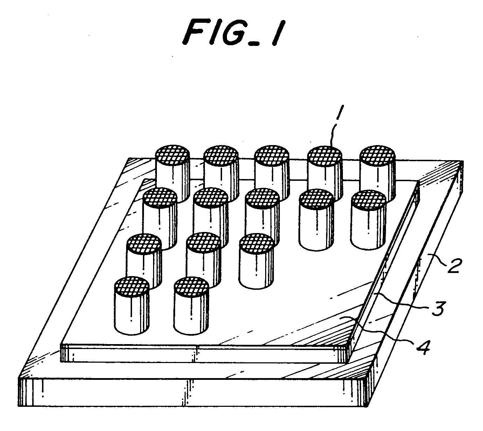

Fig. 1 is a view for illustrating a process for producing a ceramic honeycomb body. As shown in Fig. 1, a plurality of ceramic honeycomb bodies 1 shaped by extrusion are placed on a fiber board 3 as a ceramic plate on a shelf plate 2 such that open-cell end faces of the honeycomb bodies contact the fiber board, and the ceramic honeycomb bodies are fired in this state. The fiber board is composed of heat-resistive fibers. The fiber board 3 is composed mainly of heat-resistive inorganic fibers, and ordinary additives such as an inorganic filler and a binder may be incorporated therein besides the inorganic fibers. A coating layer 4 made of mullite or cordierite is formed in a thickness "t" on the surface of the fiber board 3 as shown in Fig. 1, if wished, so that color change of the lower end face of the honeycomb body may be effectively prevented. The coating layer 4 may be applied to the end face of the honeycomb body by brushing, spraying or flame spraying. This was discovered as follows. That is, when a cordierite-based honeycomb body was fired in the state that the structural body was placed on a fiber board composed mainly of silica-alumina, it occasionally happened that a face (a lower end face) of the body contacting the board became whitish. In order to prevent this phenomenon, it was discovered that mullite and cordierite are suitable. It is considered that the above color change occurs due to the change in composition through reaction between the board and the honeycomb body.

The ceramic plate or fiber board 3 as an example of the ceramic plate made of the heat-resistive inorganic fibers used in the present invention has the following properties. Such a fiber board is commercially available, for example, from NICHIAS CORPORATION (Trade name: Fine Flex 18HD). Such fiber boards may be produced by an ordinary fiber board-producing process. For example, mixed fibers of alumina fibers and silica fibers are mixed with an organic binder and water to disperse the fibers therein. Then, the resulting mixture is press molded and dewatered through a mesh. Then, a glass component and/or an oxide such as B₂O₃ is incorporated into the molding, which is dried and fired to obtain a fiber board.

| | |
|---|---|
| Chemical composition: | Al₂O₃ 55 to 95 wt%, SiO₂ 5 to 45% |
| Heat resistance: | not less than 1,400°C |
| Bulk density d : | d ≧ 1.0 g/cm³ |
| Bending strength: | not less than 40 kg/cm² (at room temperature) |
| Thickness t: | 10 ≦ t ≦ 30 (mm) |

If the bulk density is less than 1.0 g/cm³, as is clear from the examples mentioned below, the honeycomb body is attached and clogged with the fibers. If the thickness is less than 10 mm, since the strength is small, it is likely that the honeycomb body is cracked and warped. Mullite and cordierite are suitable as the coating material for preventing the color change of the honeycomb body. The thickness of the coating layer is preferably in a range of 0.5 mm ≦ t₁ ≦ 2.0 mm. If the thickness is more than 2.0 mm, it is likely that the coating layer peels from the ceramic plate. If the thickness is less than 0.5 mm, it is likely that no effect can be obtained for the prevention of the color change. The thickness of the coating layer is preferably 0.6 ≦ t₁ ≦ 1.5 mm.

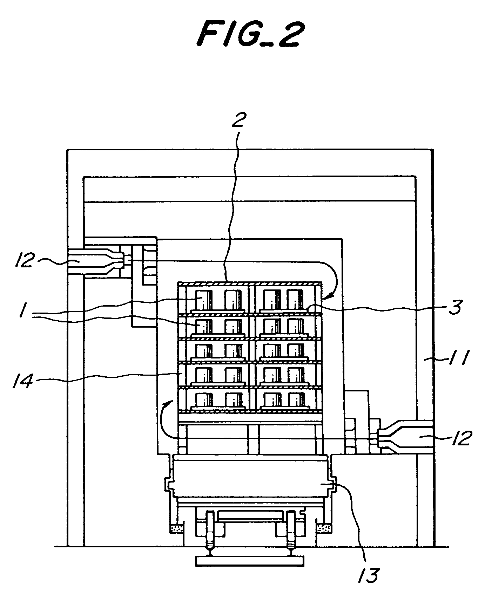

Fig. 2 is a view for illustrating the state in which the ceramic honeycomb bodies are actually fired in the tunnel kiln as shown in Fig. 1. In Fig. 2, heating burners 12 are provided in a kiln wall 11 of the tunnel kiln, and a truck 13 moves through the tunnel kiln. Shelf plates 2 in the state shown in Fig. 1 are piled on the truck 13 through poles 14, and the honeycomb bodies are fired by passing the truck through the tunnel kiln.

### Experiment 1

Fiber boards having dimensions, compositions and densities shown in Table 1 were used in Examples 1-6, and a conventional setter having the honeycomb structure was used in Comparative Example. Green ceramic honeycomb bodies having a diameter of 124 mm and a height of 20 cm were fired by passing them through the tunnel kiln as shown in Fig. 2. After the firing, the twisting of ribs, depressed amounts of central portions, occurrence rates of cracks at the end faces, and differences in dimensions between the upper and lower portions were measured with respect to the fired products. Twisting of the ribs was visually judged. The difference in dimensions was determined by calculating a difference in diameter, D₁ - D₂, of the honeycomb body as shown in Fig. 3(a). The occurrence rate of the cracks at the end face was determined from the percentage of the cracked cases per the total cases. The depressed amount was determined from a depressed amount D₃ in the central portion of the lower end face of the honeycomb body as shown in Fig. 3(b). Results are also shown in Table 1.

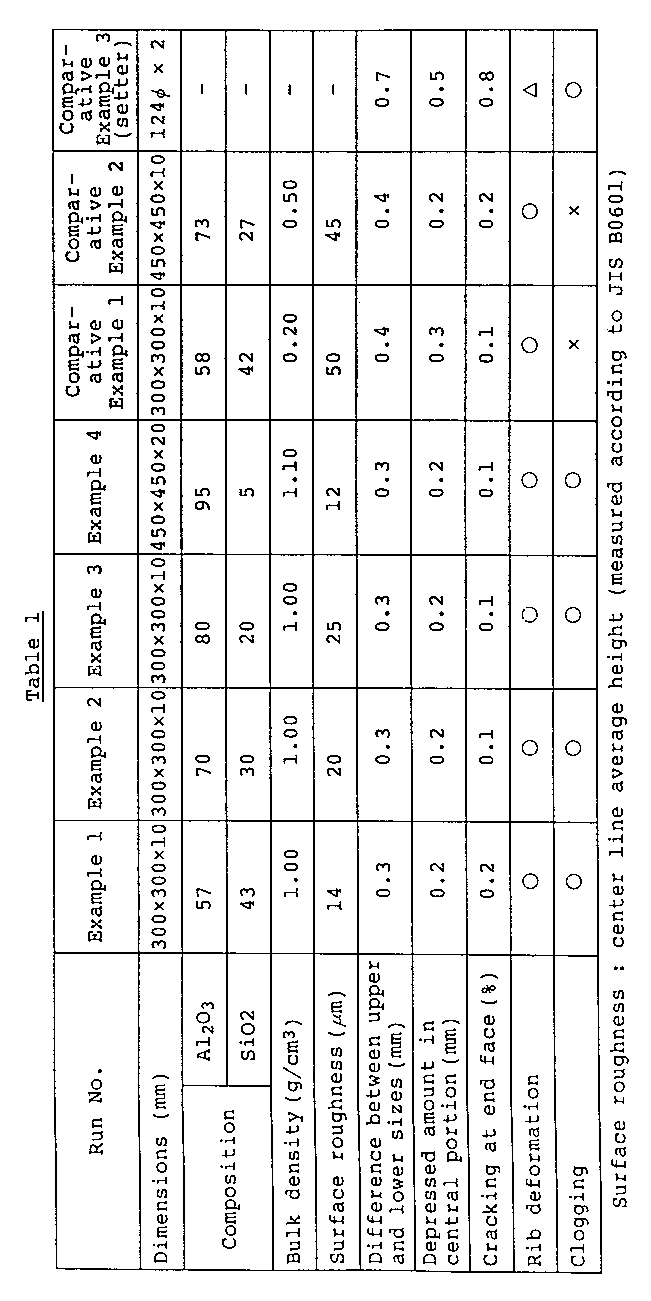

From the results in Table 1, it is seen that Examples 1, 2, 3 and 4 were free from twisting of the ribs, and had smaller depressed amounts, smaller cracking rates at the end faces, and smaller dimension differences as compared with Comparative Examples 1 and 2 having the bulk density of not less than 1.0 g/cm³ and Comparative Example 3.

### Experiment 2

Further, the fiber boards and plate and the setter shown in Table 1 as well as an alumina base plate were used, and some fiber boards (Examples 5 through 8) were each coated with a coating material at a given thickness as shown in Table 2, and the other fiber board was not coated as comparative example. The dimensional difference between the upper and lower portions, the depressed amount of the central portion, the cracking at the end face, the twisting of the ribs and clogging were measured in the same manner as in Experiment 1 with respect to the fired honeycomb bodies, and color change was examined. Results are shown in Table 2.

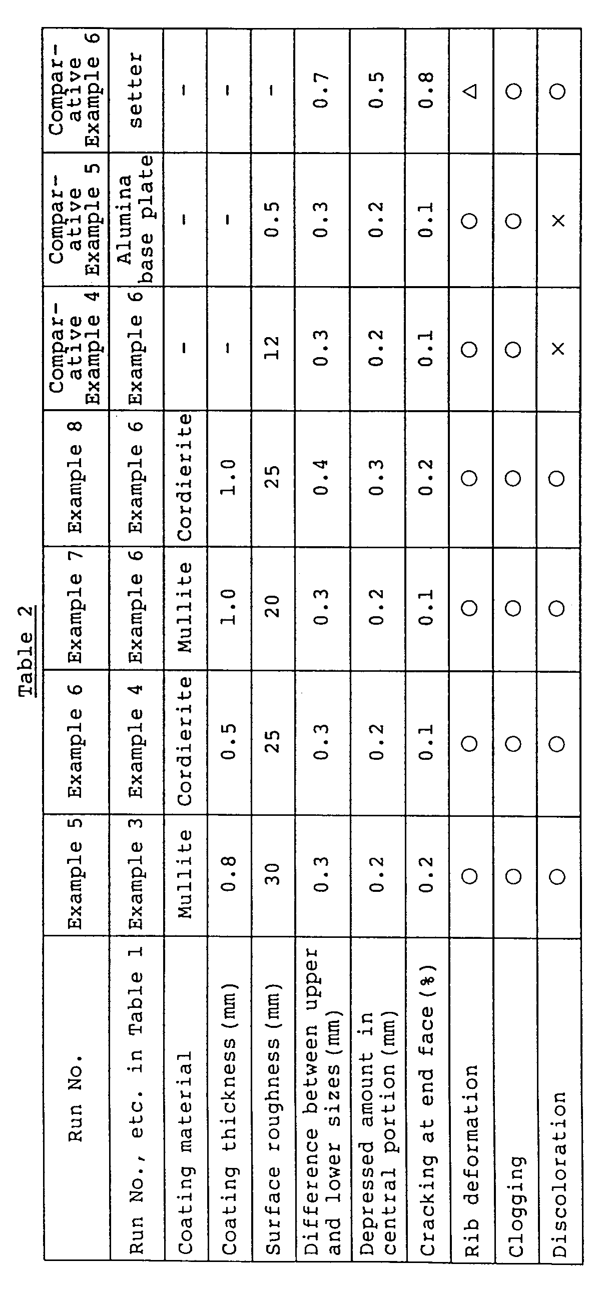

As is seen from Table 2, each of Examples 5 through 8 in which the surface of the fiber board was coated with the coating layer did not change the color, and thus the coating layer had an effect upon the color change.

The present invention is not limited to the above-mentioned examples, and various modifications, variations and changes are possible. For example, the honeycomb bodies are fired in the tunnel kiln in the above examples, but the process need not be limited to firing in a tunnel kiln. The process may be applied to other kilns, such as periodic kilns.

It is clear from the above description that our novel teaching, whereby the green ceramic honeycomb body is fired with a ceramic plate composed mainly of heat-resistive inorganic fibers placed between the honeycomb body and the shelf plate, enables twisting of the ribs and the deformation of the end face due to the thermal deformation of the ceramic plate as well as the incidental cracking of the end face in the honeycomb body to be reduced, and ceramic honeycomb bodies having excellent properties to be obtained. Further, service life of the firing table may be prolonged as compared with the conventional setter. Furthermore, the dimensional difference between the upper and lower portions of the honeycomb body may be reduced. In addition, when the honeycomb body is fired on the fiber board on which the coating layer made of either one of mullite and cordierite is formed, the change of color due to the reaction between the ceramic plate and the lower end face of the honeycomb body on firing may be prevented.

## Claims

1. A process for producing a honeycomb-structure ceramic body, in which a honeycomb-structure green body (1) is fired on a ceramic plate (3), with an open-cell end face of the body (1) contacting the ceramic plate (3), characterised in that the ceramic plate (3) is composed mainly of heat-resistant inorganic fibres and has a bulk density not less than 1.00g/cm³.

2. A process according to claim 1 in which the ceramic plate (3) is from 10 to 30mm thick.

3. A process according to claim 1 or claim 2 in which the heat-resistant inorganic fibres of the ceramic plate (3) are 55 to 95wt% Al₂O₃ and 5 to 45wt% SiO₂.

4. A process according to claim 3 in which the ceramic plate (3) is a fibre board obtainable by dispersing the Al₂O₃ and SiO₂ fibres in water and organic binder, press moulding them and dewatering through a mesh, adding a glass component and/or an oxide such as B₂O₃ to the moulding, drying and firing.

5. A process according to any one of the preceding claims in which the ceramic plate (3) has a surface coating layer (4) of mullite or cordierite.

6. A process according to claim 5 in which the surface coating layer (4) is from 0.5 to 2mm thick.

7. A process according to claim 5 or claim 6 in which the surface coating layer (4) is obtainable by brushing, spraying or flame spraying the mullite or cordierite.

8. A process according to any one of the preceding claims in which, for the firing of the body (1), the ceramic plate (3) rests on one of a stack of shelf plates (2) in a kiln.

## Patentansprüche

1. Verfahren zur Herstellung eines Keramikkörpers mit Wabenstruktur, bei dem ein Grünkörper (1) mit Wabenstruktur auf einer Keramikplatte (3) gebrannt wird, wobei eine offene Zellen aufweisende Stirnfläche des Körpers (1) die Keramikplatte (3) berührt, dadurch gekennzeichnet, daß die Keramikplatte (3) hauptsächlich aus hitzebeständigen anorganischen Fasern aufgebaut ist und eine Gesamtdichte von nicht weniger als 1,00 g/cm³ besitzt.

2. Verfahren nach Anspruch 1, worin die Keramikplatte (3) 10 bis 30 mm dick ist.

3. Verfahren nach Anspruch 1 oder 2, worin die hitzebeständigen anorganischen Fasern der Keramikplatte (3) zu 55 bis 95 Gew.-% aus Al₂O₃ und zu 5 bis 45 Gew.-% aus SiO₂ bestehen.

4. Verfahren nach Anspruch 3, worin die Keramikplatte (3) eine Faserplatte ist, die erhalten werden kann durch: Dispergieren der aus Al₂O₃ und SiO₂ gebildeten Fasern in Wasser und organischem Bindemittel, Preßformen und Entwässern durch ein Sieb, Zugeben einer Glaskomponente und/oder eines Oxids wie z.B. B₂O₃ zum Formkörper, Trocknen und Brennen.

5. Verfahren nach einem der vorhergehenden Ansprüche, worin die Keramikplatte (3) eine Oberflächenüberzugsschicht (4) aus Mullit oder Cordierit besitzt.

6. Verfahren nach Anspruch 5, worin die Oberflächenüberzugsschicht (4) 0,5 bis 2 mm dick ist.

7. Verfahren nach Anspruch 5 oder 6, worin die Oberflächenüberzugsschicht (4) durch Aufstreichen, Aufspritzen oder Flammspritzen des Mullits oder Cordierits erhalten werden kann.

8. Verfahren nach einem der vorhergehenden Ansprüche, worin die Keramikplatte (3) zum Brennen des Körpers (1) auf einer eines Stapels von Regalplatten (2) in einem Ofen aufruht.

## Revendications

1. Procédé pour produire un élément en céramique à structure en nid d'abeilles, dans lequel un corps (1) à structure en nid d'abeilles est calciné sur une plaque (3) en céramique, avec une face d'extrémité à cellules ouvertes de l'élément (1) contactant la plaque (3) en céramique, caractérisé en ce que la plaque (3) en céramique est composée principalement de fibres inorganiques résistantes à la chaleur et a une densité globale non inférieure à 1,00g/cm³.

2. Procédé selon la revendication 1 dans lequel la plaque (3) en céramique a une épaisseur de 10 à 30 mm.

3. Procédé selon la revendication 1 ou 2 dans lequel les fibres inorganiques résistantes à la chaleur de la plaque (3) en céramique sont composées de 55 à 95% en poids d'Al₂O₃ et de 5 à 45% en poids de SiO₂.

4. Procédé selon la revendication 3, dans lequel la plaque (3) en céramique est un plateau de fibres que l'on peut obtenir par dispersion des fibres de Al₂O₃ et de SiO₂ dans de l'eau et un liant organique, leur moulage en presse, et enlèvement de l'eau à travers un écran à mailles, ajout d'un composant de verre et/ou d'un oxyde tel que B₂O₃ au moulage, séchage et calcination.

5. Procédé selon l'une quelconque des revendications précédentes dans lequel la plaque (3) en céramique a une couche de revêtement de surface (4) de mullite ou de cordiérite.

6. Procédé selon la revendication 5 dans lequel la couche (4) de revêtement de surface a une épaisseur de 0,5 à 2 mm.

7. Procédé selon la revendication 5 ou 6 dans lequel la couche (4) de revêtement de surface peut être obtenue par brossage, vaporisation ou vaporisation de flamme de mullite ou de cordiérite.

8. Procédé selon l'une quelconque des revendications précédentes dans lequel, pour la calcination du corps (1), la plaque de céramique (3) repose sur une des piles des plaques (2) de stockage dans un four.
